# EUROPÄISCHE PATENTSCHRIFT

(11) **EP 3 315 284 B1**
(45) Veröffentlichungstag und Bekanntmachung des Hinweises auf die Patenterteilung: **03.06.2020**
(21) Anmeldenummer: 17192857.5
(22) Anmeldetag: 25.09.2017
(51) Int. Cl.: B29C 48/02, B29C 48/25, B29C 48/30, B29C 48/14, B29C 48/92, B29C 64/241, B29C 64/236, B29C 64/118, B29C 65/00, B29C 65/70, B29C 65/40, B29C 48/05

(54) **EXTRUSIONSVORRICHTUNG MIT DREHBARER HEISSLUFTDÜSE**
EXTRUSION DEVICE WITH PIVOTABLE HOT AIR BLOWER
DISPOSITIF D'EXTRUSION AVEC SOUFFLEUR PIVOTABLE D'AIR CHAUD

(30) Priorität: 28.10.2016 DE 102016120698
(43) Veröffentlichungstag der Anmeldung: 02.05.2018
(73) Patentinhaber: Dohle Extrusionstechnik GmbH, 53809 Ruppichteroth (DE)
(72) Erfinder: DOHLE, Peter, 53809 Ruppichteroth (DE)
(74) Vertreter: Fritz, Edmund Lothar

(56) Entgegenhaltungen:
- EP-A1- 1 637 234
- EP-A1- 3 106 290
- WO-A1-2010/112403
- WO-A1-2015/150336
- DE-A1-102006 035 250
- DE-A1-102008 003 220

## Beschreibung

Die vorliegende Erfindung betrifft eine Extrusionsvorrichtung umfassend eine Extrudereinheit, in der in einer Förderrichtung ein Extrudat gefördert wird, wobei das Extrudat aus einer Extruderdüse der Extrudereinheit austritt, sowie umfassend eine Heißlufteinheit mit einer Heißluftdüse, die derart angeordnet ist, dass die Heißluft neben der Extruderdüse austritt, wobei die Heißluftdüse oder die Heißlufteinheit an der Extrusionsvorrichtung um eine Längsachse der Förderrichtung der Extrudereinheit drehbar angeordnet ist.

Extrusionsvorrichtungen dieser Art sind aus dem Stand der Technik bekannt. Beispielsweise wird eine derartige Extrusionsvorrichtung in der DE 42 36 281 C2 beschrieben. Diese Vorrichtungen werden in der Regel für das Kunststoffschweißen eingesetzt. Dazu wird der aufzuschmelzende Kunststoff der Vorrichtung entweder über einen Kunststoffschweißdraht zugeführt oder es wird ein Kunststoffgranulat verwendet. Granulat oder Schweißdraht werden in der Vorrichtung durch Erwärmung beispielsweise in einer beheizten Extruderschnecke aufgeschmolzen und dann in Förderrichtung zur Extruderdüse gefördert, wo das geschmolzene Extrudat austritt. Beim Kunststoffschweißen ist es in der Regel erforderlich, die zu verschweißenden Bereiche zu erwärmen, damit sie sich mit dem Extrudat verbinden. Hierzu verwendet man Heißluft, die man über die Heißlufteinheit der Extrusionsvorrichtung dem Schweißbereich zuführt. Die Heißluft wird beispielsweise in der Extrusionsvorrichtung selbst erwärmt und dann einer Heißluftdüse zugeführt, über die sie in der Nähe der Extruderdüse ausströmt, so dass man jeweils den Bereich vorwärmt, der anschließend geschweißt werden soll. Extrusionsvorrichtungen der vorgenannten Art sind häufig so genannte Handschweißextruder, die von Hand entlang der Schweißnaht geführt werden, so dass bei einem Richtungswechsel in der zu bildenden Schweißnaht die Extrusionsvorrichtung entsprechend von Hand mitgeführt wird, so dass man mit einer stationär an der Extrusionsvorrichtung angebrachten Heißluftdüse arbeiten kann.

In jüngerer Zeit gewinnt die Technologie des 3D-Drucks für die Herstellung von Formteilen aus Kunststoff beispielsweise für Prototypen immer mehr an Bedeutung. Mittels des 3D-Drucks lassen sich auch verhältnismäßig große sehr komplex geformte Bauteile aus Kunststoff vergleichsweise kostengünstig und schnell herstellen. Für die Herstellung von Bauteilen aus thermoplastischen Kunststoffen ließen sich grundsätzlich auch Extrusionsvorrichtungen der vorgenannten Art einsetzen. Problematisch ist hierbei jedoch, dass im 3D-Druck die Bauteile schichtweise aufgebaut werden und dabei der Bereich, aus dem das Extrudat austritt in schnellen Bewegungen in X- und Y-Richtung geführt wird. Dennoch dauert es eine gewisse Zeit lang, bis eine vollständige Schicht des Bauteils aufgebaut ist, so dass der Kunststoff der vorhergehenden Schicht bereits abgekühlt ist, wenn der Extruderkopf die gleiche Stelle für die Erstellung der nächsten Schicht erneut anfährt. Deshalb lässt sich keine stoffschlüssige Verbindung mehr mit dem neuen Kunststoff der nächsten Schicht herstellen. Man benötigt daher eine Vorwärmung des zu schweißenden Bereichs. Hierbei besteht jedoch das Problem, dass der Extruderkopf mit der Extruderdüse bei der 3-D-Druck Technologie einen schnellen Richtungswechsel vollzieht und bei einer herkömmlichen Vorrichtung mit stationärer Heißluftdüse der zu schweißende Bereich nach einem Richtungswechsel durch die Heißluftdüse nicht mehr in Verfahrrichtung der Extrusionsvorrichtung vor der Extruderdüse erwärmt werden kann.

Aus der WO 2015/150336 A1 ist eine Extrusionsvorrichtung mit den Merkmalen der eingangs genannten Gattung bekannt, bei der ein distaler Abschnitt des Austrittskanals für die Heißluft um die Extruderachse drehbar ausgebildet ist. Dies dient dazu, die jeweilige Position des Austrittskanals an die jeweilige Arbeitsweise des Benutzers anzupassen, zum Beispiel, um eine Anpassung für Rechtshänder oder Linkshänder vorzunehmen. Es ist jedoch nicht ersichtlich, dass sich die Heißluftdüse während des Betriebs der Extrusionsvorrichtung selbsttätig dreht. Eine Variante sieht vor, dass die Extruderdüse synchron mit diesem distalen Abschnitt des Austrittskanals für Heißluft rotierbar ausgebildet ist.

Aus der nicht vorveröffentlichten EP 3 106 290 A1 ist ein Verfahren zum Auftragen eines Werkstoffes durch 3D-Druck sowie eine entsprechende Vorrichtung bekannt, bei der an dem Extrudergehäuse außen eine Vorrichtung zum Erwärmen der Fläche, auf die der Werkstoff aufgebracht wird, angebracht ist, wobei dies auch ein Heizgebläse sein kann. Es ist möglich, das Extrudergehäuse mit der Düse um seine Längsachse zu drehen, wodurch sich auch die daran angebrachte Vorrichtung mitdreht, so dass ein jeweils der Bewegung des Extruders vorgelagerter Bereich der Fläche, auf der der Werkstoff aufgebracht wird, erwärmt werden kann. Es ist bei dieser bekannten Vorrichtung jedoch nicht möglich, die Heizvorrichtung unabhängig vom Extrudergehäuse zu drehen.

Hier setzt die vorliegende Erfindung ein. Die Aufgabe der vorliegenden Erfindung besteht darin, eine verbesserte Extrusionsvorrichtung mit den Merkmalen der eingangs genannten Gattung zur Verfügung zu stellen, die für das Kunststoffschweißen oder auch für die Herstellung von Bauteilen aus Kunststoff in 3-D-Druck Technik geeignet ist und bei der es möglich ist, bei Richtungswechsel in der Verfahrrichtung der Extrusionsvorrichtung die Heißluft zur Vorwärmung des Schweißbereichs immer gezielt in dem vor der Extruderdüse liegenden Bereich zuzuführen.

Die Lösung dieser Aufgabe liefert eine Extrusionsvorrichtung der eingangs genannten Gattung mit den Merkmalen des Hauptanspruchs.

Erfindungsgemäß ist für die Drehbewegung der Heißluftdüse oder der Heißlufteinheit um die Längsachse der Förderrichtung wenigstens eine Drehantriebsvorrichtung vorgesehen, sowie Getriebemittel, angeordnet zwischen dem Drehantrieb und der drehbaren Heißluftdüse oder Heißlufteinheit. Dadurch wird es möglich, bei einem Wechsel der Verfahrrichtung der Extrusionsvorrichtung die Heißluftdüse oder die ganze Heißlufteinheit jeweils in eine solche Position zu drehen, dass sie in Verfahrrichtung gesehen vor der Extruderdüse angeordnet ist und dort den zu schweißenden Bereich vorwärmt.

Das Drehen der Heißluftdüse oder der Heißlufteinheit kann beispielsweise über die Steuerung der Extrusionsvorrichtung bewirkt werden, welche den jeweiligen Richtungswechsel der Verfahrrichtung steuert. Auf diese Weise können praktisch beliebige Verfahr-Bewegungen mit der Extrusionsvorrichtung ausgeführt werden, beispielsweise können auch Kurvenlinien gefahren werden und die Heißluftdüse wird dabei in Abhängigkeit (durch Drehen um die Längsachse der Extrudereinheit) immer mitgeführt, so dass sie immer denjenigen Bereich vorwärmt, der danach geschweißt werden soll, ohne dass es einer Unterbrechung im Schweißprozess bedarf.

Gemäß einer bevorzugten Aufgabenlösung kann man beispielsweise für die Drehbewegung der Heißluftdüse oder der Heißlufteinheit um die Längsachse der Förderrichtung einen Stellmotor verwenden.

Dabei kann man bevorzugt vorsehen, dass die Drehantriebsvorrichtung einen Antriebsmotor umfasst sowie eine von diesem Antriebsmotor angetriebene, vorzugsweise kardanische Antriebswelle. Eine kardanische Antriebswelle ist nicht erforderlich, aber sie ist vorteilhaft, wenn der Antriebsmotor aus Platzgründen nicht in der Flucht zu der drehbaren Heißluftdüse angeordnet werden kann, so dass ein Versatz im Antriebsweg vorgesehen ist.

Vorzugsweise ist weiterhin vorgesehen, dass die Getriebemittel wenigstens ein antreibendes Zahnrad umfassen, welches einer Antriebswelle zugeordnet ist sowie wenigstens ein angetriebenes Zahnrad, welches der drehbar angeordneten Heißluftdüse oder Heißlufteinheit zugeordnet ist. Auf diese Weise kann man eine Übersetzung schaffen zwischen dem Antriebsmotor und der drehbaren Heißluftdüse oder Heißlufteinheit. Als Zahnräder kann man beispielsweise nebeneinander liegende Zahnräder mit parallelen Achsen verwenden oder beispielsweise auch Kegelräder.

Es kann beispielsweise so sein, dass das angetriebene Zahnrad konzentrisch die Längsachse der Förderrichtung der Extrudereinheit umgebend angeordnet ist. Das angetriebene Zahnrad kann dann beispielsweise mit einem antreibenden Zahnrad kämmen, welches sich um die Achse einer Welle dreht, die von einem Antriebsmotor angetrieben wird. Vom antreibenden Zahnrad wird somit das Drehmoment auf das angetriebene Zahnrad übertragen und das angetriebene Zahnrad ist wiederum mit einem Bauteil verbunden, über das die Heißluftdüse gedreht wird.

Gemäß einer besonders bevorzugten konstruktiven Ausgestaltung ist vorgesehen, dass das antreibende Zahnrad neben dem angetriebenen Zahnrad und konzentrisch auf einer von der Antriebswelle angetriebenen Achse angeordnet ist, welche sich etwa parallel zur Extrudereinheit erstreckt.

Weiterhin ist es vorteilhaft, wenn das angetriebene Zahnrad mit einem Bauteil verbunden ist, welches die Extruderdüse konzentrisch mit einem Abstand durch einen Ringspalt umgibt. Der Ringspalt hat den Vorteil, dass man eine thermische Trennung zwischen der Heißluftdüse und der Extruderdüse erhält. Diese thermische Trennung ist wichtig, da in der Regel Extruderdüse und Heißluft auf unterschiedliche Temperaturen gebracht werden und eine Wärmeübertragung von der Heißluft auf die Extruderdüse daher nicht erwünscht ist.

Gemäß einer bevorzugten Weiterbildung der erfindungsgemäßen Aufgabenlösung ist vorgesehen, dass die Heißlufteinheit einen Luftring umfasst, welcher sich konzentrisch um die Extruderdüse herum erstreckt und welcher von einem Brennerrohr mit Heißluft gespeist wird. Diese konstruktive Variante schafft die Möglichkeit, die vom Brennerrohr kommende Heißluft über den Luftring ringsum über den Umfang zu verteilen.

Besonders vorteilhaft ist es, wenn das Brennerrohr und ein mit diesem verbundener äußerer Luftring stationär ausgebildet sind, wobei der äußere Luftring einen von der Heißluft durchströmten Ringkanal aufweist. Über diesen Ringkanal kann die vom Brennerrohr her zugeführte Heißluft an beliebiger Stelle des Umfangs zur Verfügung gestellt werden.

Gemäß einer bevorzugten Weiterbildung der erfindungsgemäßen Aufgabenlösung ist vorgesehen, dass der äußere Luftring in Strömungsverbindung steht mit einem inneren Luftring, welcher mit der Heißluftdüse verbunden und mit dieser drehbar ist. Die über den Ringkanal des stationären äußeren Luftrings zur Verfügung gestellte Heißluft kann dann von dem äußeren stationären Luftring in den inneren drehbaren Luftring einströmen und wird über letzteren an diejenige Stelle geführt, wo sie zur Vorwärmung des Schweißbereichs jeweils benötigt wird.

Gemäß einer bevorzugten Weiterbildung der Erfindung ist vorgesehen, dass die Heißluftdüse eine Schürze aufweist, um die Heißluft gerichtet in Bewegungsrichtung der Extrusionsvorrichtung vor der Extruderdüse austreten zu lassen. Im austretenden Bereich der Heißluft kann zum Beispiel eine Art Kanal gebildet sein, über den die Heißluft gerichtet nach unten hin, d.h. in etwa achsparallel zur Extrusionsrichtung austritt. Durch die Schürze wird eine Abschirmung in eine Richtung geschaffen, so dass die Heißluft dort nicht ungewollt seitlich austritt, sondern überwiegend nach unten hin, um dort den vorzuwärmenden Bereich zu erwärmen, auf den dann das frische Extrudat aufgebracht wird.

Besonders vorteilhaft ist es, wenn sich die Heißluftdüse an einem auswechselbar an der Extrusionsvorrichtung angebrachten Wechselaufsatz befindet. Dies schafft die Möglichkeit, die Heißluftdüse bei Bedarf zu wechseln, um beispielsweise mit unterschiedlich großen Austrittskanälen für Heißluft zu arbeiten.

Gegenstand der vorliegenden Erfindung ist weiterhin ein Verfahren zum Betrieb einer Extrusionsvorrichtung mit den Merkmalen des Anspruchs 12, bei dem erfindungsgemäß die Extrusionsvorrichtung an einem Roboter, einer Verfahreinrichtung oder an einer Maschine in x-Richtung und/oder in y-Richtung quer zur Förderrichtung des Extrudats und/oder in z-Richtung entsprechend der Förderrichtung des Extrudats verfahrbar angeordnet ist, wobei bei einem Richtungswechsel in der Verfahrrichtung des Roboters, der Verfahreinrichtung oder der Maschine über eine Steuereinrichtung die Heißluftdüse oder die Heißlufteinheit in einem Drehwinkel entsprechend dem Richtungswechsel in der Verfahrrichtung jeweils um die Längsachse der Förderrichtung der Extrudereinheit gedreht wird, derart, dass die Heißluft gerichtet in Verfahrrichtung der Extrusionsvorrichtung jeweils vor der Extruderdüse austritt. Das erfindungsgemäße Verfahren ermöglicht so eine gezielte Drehung der Heißluftdüse oder Heißlufteinheit in eine Richtung, in der der Bereich des Kunststoffs, auf den das Extrudat aufgebracht werden soll, vorgewärmt wird. Das Verfahren ist insbesondere bei Extrusionsvorrichtungen für das Kunststoffschweißen vorteilhaft anwendbar, die auf größeren Flächen Extrudat aufbringen und/oder entlang komplexer Linien mit häufigem oder permanentem Richtungswechsel (Kurvenlinien) verfahren.

Weiterhin ist das Verfahren für die Herstellung insbesondere von größeren Bauteilen aus thermoplastischen Kunststoffen im 3-D-Druck vorteilhaft, weil dort eine Vorwärmung erforderlich ist, da eine zu lange Zeit vergeht, bis die Extrusionsdüse wieder an der gleichen Stelle der nächsten Schicht angelangt ist, so dass dort der Kunststoff der zuvor aufgebrachten Schicht bereits erkaltet ist. Die Heißluftdüse oder Heißlufteinheit wird dabei bevorzugt in ihrer Drehbewegung über die Steuerung der Extrusionsvorrichtung gesteuert, die auch die Verfahrrichtung der Extrusionsdüse vorgibt. Beide Bewegungen können somit für eine synchrone Steuerung von Extruderdüse und Heißluftdüse koordiniert werden. Wenn beispielsweise die Extrusionsvorrichtung aus der Y-Richtung einen Richtungswechsel in die X-Richtung vollzieht (90 ° Richtungswechsel), dann wird die Heißluftdüse oder die Heißlufteinheit entsprechend um 90 ° um die Extruderachse (Achse der Förderrichtung im Extruder) gedreht.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine erfindungsgemäße Extrusionsvorrichtung gemäß einer beispielhaften Ausführungsvariante der vorliegenden Erfindung in perspektivischer, teileweise explodierter Darstellung;
Figur 2 Ansicht der Extrusionsvorrichtung gemäß Figur 1 von der Unterseite her gesehen;
Figur 3 eine vergrößerte Schnittdarstellung eines Längsschnitts entlang der Linie A-A von Figur 2.

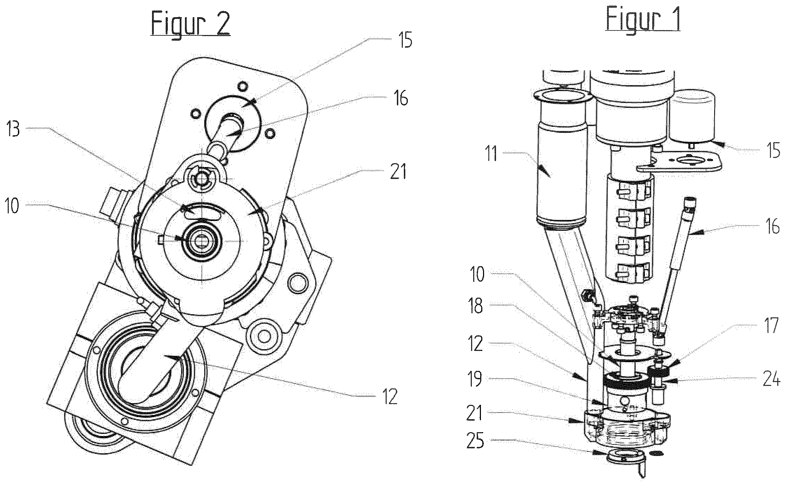

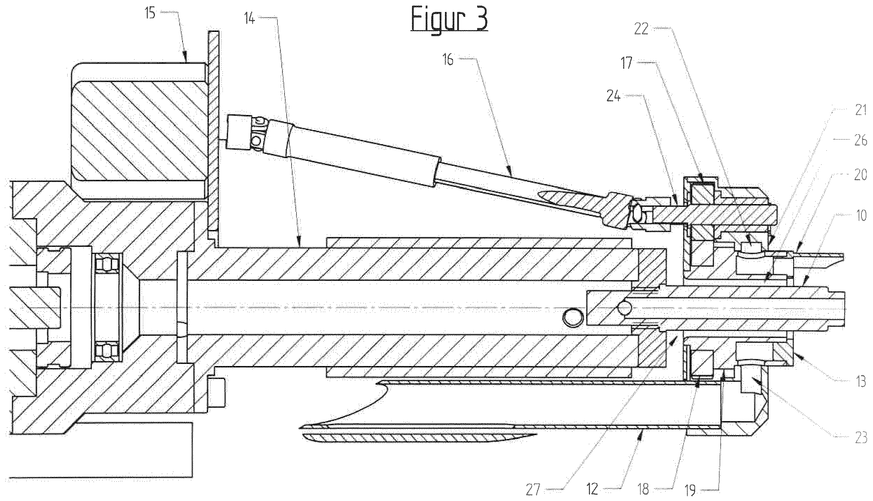

Zunächst wird auf die Figur 1 Bezug genommen, die die wesentlichen Teile einer Extrusionsvorrichtung gemäß der vorliegenden Erfindung in perspektivischer Ansicht zeigt. Die Extrusionsvorrichtung weist eine Extrudereinheit auf mit einem Gehäuse, in deme sich eine Extruderschnecke befindet, über die entweder ein Kunststoffschweißdraht oder ein Kunststoffgranulat, welches erhitzt und so aufgeschmolzen wird, in Förderrichtung zu einer Extruderdüse 10 gefördert wird, an deren vorderem Ende des geschmolzene Extrudat austritt. Die Extrusionsvorrichtung weist weiterhin eine Heißlufteinheit auf mit einer Heizvorrichtung 11, in der zugeführte Luft erhitzt wird und mit einem Brennerrohr 12, über das die Heißluft zu einer Heißluftdüse 13 im vorderen Bereich der Extrusionsvorrichtung gefördert wird, wobei sich die Heißluftdüse 13 (siehe Figur 3) seitlich neben der Extruderdüse 10 befindet.

Weitere Details bezüglich der hier relevanten Teile der erfindungsgemäßen Extrusionsvorrichtung ergeben sich aus der Schnittdarstellung gemäß Figur 3. Die Extrudereinheit umfasst eine hier nicht dargestellte Extruderschnecke mit einem Drehantrieb in einem Extrudergehäuse 14, mittels derer zugeführtes Granulat oder Schweißdraht aus Kunststoff aufgeschmolzen wird und in Förderrichtung (Längsrichtung der Extrudereinheit) in eine Extruderdüse 10 gefördert wird, an deren vorderem Ende das Extrudat austritt. Die Heißluftdüse 13 ist erfindungsgemäß um die Achse der Förderrichtung des Extruders drehbar. Dazu weist die Extrusionsvorrichtung eine Drehantriebsvorrichtung 15 auf (beispielsweise ein Stellmotor) mittels derer eine Kardanwelle 16 drehbar angetrieben wird, deren Drehbewegung wiederum auf ein antreibendes Zahnrad 17 übertragen wird. Dieses antreibende Zahnrad befindet sich auf einer Achse 24, die von der Kardanwelle 16 angetrieben wird und treibt ein beispielsweise im Durchmesser größeres Zahnrad 18 mit mehr Zähnen an, so dass eine Untersetzung geschaffen wird. Dieses angetriebene Zahnrad 18 ist mit einem drehbaren inneren Luftring 19 fest verbunden, so dass dieser innere Luftring 19 bei Betätigung der Antriebsvorrichtung 15 gedreht wird. Dieses innere Luftring 19 weist einen Ringkanal auf, in den die heiße Luft radial beispielsweise über mehrere Löcher im Umfangsbereich des Luftrings 19 eintritt, wobei die Luft dann über eine Öffnung oder einen Kanal der Heißluftdüse 13 im unteren Bereich im Wesentlichen in axialer Richtung austritt, wo sie dann den Kunststoffbereich, auf den das Extrudat aufgebracht werden soll, vorwärmt.

Das angetriebene Zahnrad 18 ist konzentrisch angeordnet zum Extrudergehäuse und zur Extruderdüse 10 (siehe Figur 1) und umgibt somit die Achse der Förderrichtung des Extrudats. Das antreibende Zahnrad 17 befindet sich seitlich daneben. Die Drehbewegung des angetriebenen Zahnrads 18 wird unmittelbar auf den drehbaren inneren Luftring 19 und auf die Heißluftdüse 13 übertragen. Wie man in Figur 1 weiterhin erkennt, ist die Heißluftdüse Teil eines Bauteils 25, das als Wechselaufsatz ausgebildet ist, so dass dieses Bauteil 25 am unteren Ende der Heißlufteinheit mit der Heißluftdüse 13 ausgetauscht werden mit kann, wenn man beispielsweise eine Heißluftdüse mit einer anderen Größe oder Form benötigt.

Am unteren Ende neben der Öffnung der Heißluftdüse 13 befindet sich in diesem Ausführungsbeispiel eine Schürze 20, die die Heißluft abschirmt und ein seitliches Austreten der Heißluft verhindert, so dass diese gezielt nach unten hin geleitet wird. Anstelle dieser Schürze 20 kann man auch einen Wechselaufsatz 25 mit einem anders geformten Austrittsbereich für die Heißluft verwenden. Beispielsweise kann die Heißluft über ein Röhrchen oder dergleichen austreten, dessen Durchmesser selbstverständlich variieren kann.

Man sieht in Figur 3, dass sich die Heißluftdüse 13 neben der Extruderdüse 10 befindet, so dass die Heißluft dort aus der Heißluftdüse 13 neben dem austretenden Extrudat austritt. Die Extrusionsvorrichtung wird nun so verfahren, dass sich die Heißluftdüse 13 in Verfahrrichtung immer jeweils vor der Extruderdüse 10 befindet, damit der Kunststoff im Schweißbereich gezielt dort erwärmt wird, bevor das Extrudat aufgebracht wird. Ändert die Extrusionsvorrichtung ihre Verfahrrichtung, dann wird über eine Steuerung die Heißluftdüse 13 in einem entsprechenden Drehwinkel um die Längsachse der Extrudereinheit gedreht in eine solche Position, dass sie dann wieder in Verfahrrichtung vor der Extruderdüse 10 angeordnet ist. Dieser Vorgang kann sehr rasch vollzogen werden, so dass auch bei schnellem oder ständigem Richtungswechsel (Fahren einer Kurvenlinie) die Position der Heißluftdüse 13 durch Drehbewegung immer angepasst wird.

In den drehbaren inneren Luftring 19 gelangt die Heißluft über einen äußeren stationären Luftring 21, in dem sich ein Ringkanal 22 befindet, welcher über die oben genannten Löcher mit dem Ringkanal im inneren Luftring 19 in Verbindung steht. Die Luft strömt also zunächst aus dem Brennerrohr 12 in den Ringkanal 22 des äußeren Luftrings 21 und kann sich so über dessen gesamten Umfang verteilen und strömt dann von dort aus in den inneren Luftring 19. Der innere Luftring 19 kann sich gegenüber dem äußeren stationären Luftring 21 gleitend drehen, da beide aus entsprechenden Materialien ausgeführt sind. In den Ringkanal 22 des äußeren Luftrings 21 gelangt die Luft über das Brennerrohr 12, das in seinem unteren Endbereich im Inneren eine Abwinklung aufweist, so dass über einen radialen Kanal 23 die Luft radial von außen in den Ringkanal 22 des äußeren Luftrings 21 einströmen kann.

In Figur 3 ist erkennbar, dass eine thermische Trennung vorgesehen ist zwischen der konzentrisch innen liegenden Extruderdüse 10 und dem drehbaren inneren Luftring 19 der Heißlufteinheit. Zwischen beiden befindet sich ein Ringspalt 26, um so zu verhindern, dass Wärme von dem Luftring 19 auf die Extruderdüse 10 übertragen wird, denn Heißlufteinheit und Extrudereinheit arbeiten mit unterschiedlichen Temperaturen. Außerdem ist auch in axialer Richtung ein Abstandsspalt 27 zwischen dem vorderen Ende des Extrudergehäuses 14 und der hinteren Stirnfläche der Baueinheit mit dem inneren Luftring 19 vorgesehen, um auch hier eine Wärmeübertragung zu vermeiden.

Das Brennerrohr 12 der Heißluftzuführung kann beispielsweise zunächst etwa parallel neben dem Extrudergehäuse 14 und dann weiter oben etwas abgewinkelt zu der Heizvorrichtung 11 hin verlaufen, in der die Luft erhitzt wird (zum Beispiel elektrisch über eine Heizpatrone), wobei die Heißlufteinheit aus Platzgründen zweckmäßigerweise an der Seite angebracht ist, die bezogen auf das Extrudergehäuse 14 der Kardanwelle 16 und dem Antriebsmotor 15 gegenüberliegt.

### Bezugszeichenliste

- 10: Extruderdüse
- 11: Heizvorrichtung
- 12: Brennerrohr
- 13: Heißluftdüse
- 14: Extrudergehäuse
- 15: Drehantriebsvorrichtung
- 16: Kardanwelle
- 17: antreibendes Zahnrad
- 18: angetriebenes Zahnrad
- 19: innerer Luftring
- 20: Schürze
- 21: äußerer Luftring
- 22: Ringkanal
- 23: radialer Kanal
- 24: Achse
- 25: Bauteil/Wechselaufsatz
- 26: Ringspalt
- 27: Abstandsspalt

## Patentansprüche

1. Extrusionsvorrichtung umfassend eine Extrudereinheit, in der in einer Förderrichtung ein Extrudat gefördert wird, wobei das Extrudat aus einer Extruderdüse (10) der Extrudereinheit austritt, sowie umfassend eine Heißlufteinheit mit einer Heißluftdüse (13), die derart angeordnet ist, dass die Heißluft neben der Extruderdüse (10) austritt,
wobei die Heißluftdüse (13) oder die Heißlufteinheit an der Extrusionsvorrichtung um eine Längsachse der Förderrichtung der Extrudereinheit drehbar angeordnet ist,
**dadurch gekennzeichnet, dass** für die Drehbewegung der Heißluftdüse (13) oder der Heißlufteinheit um die Längsachse der Förderrichtung wenigstens eine Drehantriebsvorrichtung (15) vorgesehen ist sowie Getriebemittel (17, 18), angeordnet zwischen dem Drehantrieb (15) und der drehbaren Heißluftdüse (13) oder Heißlufteinheit.

2. Extrusionsvorrichtung nach Anspruch 1, **dadurch gekennzeichnet, dass** die Drehantriebsvorrichtung (15) einen Antriebsmotor umfasst sowie eine von diesem Antriebsmotor angetriebene, vorzugsweise kardanische Antriebswelle (16).

3. Extrusionsvorrichtung nach einem der Ansprüche 1 oder 2, **dadurch gekennzeichnet, dass** die Getriebemittel wenigstens ein antreibendes Zahnrad (17) umfassen, welches einer Antriebswelle (16) zugeordnet ist sowie wenigstens ein angetriebenes Zahnrad (18), welches der drehbar angeordneten Heißluftdüse (13) oder Heißlufteinheit zugeordnet ist.

4. Extrusionsvorrichtung nach Anspruch 3, **dadurch gekennzeichnet, dass** das angetriebene Zahnrad (18) konzentrisch die Längsachse der Förderrichtung der Extrudereinheit umgebend angeordnet ist.

5. Extrusionsvorrichtung nach einem der Ansprüche 3 oder 4, **dadurch gekennzeichnet, dass** antreibende Zahnrad (17) neben dem angetriebenen Zahnrad (18) und konzentrisch auf einer von der Antriebswelle (16) angetriebenen Achse (24) angeordnet ist, welche sich etwa parallel zur Extrudereinheit erstreckt.

6. Extrusionsvorrichtung nach einem der Ansprüche 3 bis 5, **dadurch gekennzeichnet, dass** das angetriebene Zahnrad (18) mit einem Bauteil verbunden ist, welches die Extruderdüse (10) konzentrisch mit einem Abstand durch einen Ringspalt (26) umgibt.

7. Extrusionsvorrichtung nach einem der Ansprüche 1 bis 6, **dadurch gekennzeichnet, dass** die Heißlufteinheit einen Luftring (19) umfasst, welcher sich konzentrisch um die Extruderdüse (10) herum erstreckt und welcher von einem Brennerrohr (12) mit Heißluft gespeist wird.

8. Extrusionsvorrichtung nach Anspruch 7, **dadurch gekennzeichnet, dass** das Brennerrohr (12) und ein mit diesem verbundener äußerer Luftring (21) stationär ausgebildet sind, wobei der äußere Luftring (21) einen von der Heißluft durchströmten Ringkanal (22) aufweist.

9. Extrusionsvorrichtung nach Anspruch 8, **dadurch gekennzeichnet, dass** der äußere Luftring (21) in Strömungsverbindung steht mit einem inneren Luftring (19), welcher mit der Heißluftdüse (13) verbunden und mit dieser drehbar ist.

10. Extrusionsvorrichtung nach einem der Ansprüche 1 bis 9, **dadurch gekennzeichnet, dass** die Heißluftdüse (13) eine Schürze (20) aufweist, um die Heißluft gerichtet in Bewegungsrichtung (Verfahrrichtung) der Extrusionsvorrichtung vor der Extruderdüse (10) austreten zu lassen.

11. Extrusionsvorrichtung nach einem der Ansprüche 1 bis 10, **dadurch gekennzeichnet, dass** sich die Heißluftdüse (13) an einem auswechselbar an der Extrusionsvorrichtung angebrachten Wechselaufsatz (25) befindet.

12. Verfahren zum Betrieb einer Extrusionsvorrichtung mit den Merkmalen eines der Ansprüche 1 bis 11, **dadurch gekennzeichnet dass** die Extrusionsvorrichtung an einem Roboter, einer Verfahreinrichtung oder an einer Maschine in x-Richtung und/oder in y-Richtung quer zur Förderrichtung des Extrudats und/oder in z-Richtung entsprechend der Förderrichtung des Extrudats verfahrbar angeordnet ist, wobei bei einem Richtungswechsel in der Verfahrrichtung des Roboters, der Verfahreinrichtung oder der Maschine über eine Steuereinrichtung sowie mittels wenigstens einer Drehantriebsvorrichtung (15) sowie Getriebemittel (17, 18), angeordnet zwischen dem Drehantrieb (15) und der drehbaren Heißluftdüse (13) oder Heißlufteinheit, die Heißluftdüse (13) oder die Heißlufteinheit in einem Drehwinkel entsprechend dem Richtungswechsel in der Verfahrrichtung jeweils um die Längsachse der Förderrichtung der Extrudereinheit gedreht wird, derart dass die Heißluft gerichtet in Verfahrrichtung der Extrusionsvorrichtung jeweils vor der Extruderdüse (10) austritt.

## Claims

1. Extrusion device comprising an extruder unit, in which an extrudate is conveyed in a conveying direction, wherein the extrudate exits from an extruder die (10) of the extruder unit, and comprising a hot air unit with a hot air nozzle (13), which is arranged such that the hot air exits beside the extruder die (10), wherein the hot air nozzle (13) or the hot air unit on the extrusion device is arranged rotatable about the longitudinal axis of the conveying direction of the extruder unit,
**characterised in that**, for the rotational movement of the hot air nozzle (13) or the hot air unit about the longitudinal axis of the conveying direction, at least one rotary drive device (15) is provided, as well as gearing means (17, 18), arranged between the rotary drive (15) and the rotatable hot air nozzle (13) or hot air unit.

2. The extrusion device according to claim 1, **characterised in that** the rotary drive device (15) comprises a drive motor as well as a preferably cardan drive shaft (16) driven by this drive motor.

3. The extrusion device according to any one of claims 1 or 2, **characterised in that** gearing means comprise at least one driving toothed wheel (17), which is assigned to a drive shaft (16), and at least one driven toothed wheel (18), which is assigned to the rotatably arranged hot air nozzle (13) or hot air unit.

4. The extrusion device according to claim 3, **characterised in that** the driven toothed wheel (18) is arranged concentrically surrounding the longitudinal axis of the conveying direction of the extruder unit.

5. The extrusion device according to any one of claims 3 or 4, **characterised in that** driving toothed wheel (17) is arranged beside the driven toothed wheel (18) and concentrically on an axle (24) driven by the drive shaft (16), which axle extends roughly parallel to the extruder unit.

6. The extrusion device according to any one of claims 3 to 5, **characterised in that** the driven toothed wheel (18) is connected to a component, which surrounds the extruder die (10) concentrically with a spacing by an annular gap (26).

7. The extrusion device according to any one of claims 1 to 6, **characterised in that** the hot air unit comprises an air ring (19), which extends concentrically about the extruder die (10) and which is fed with hot air from a burner pipe (12).

8. The extrusion device according to claim 7, **characterised in that** the burner pipe (12) and an outer air ring (21) connected to the latter are constituted stationary, wherein the outer air ring (21) comprises an annular channel (22) through which the hot air flows.

9. The extrusion device according to claim 8, **characterised in that** the outer air ring (21) is in a flow connection with an inner air ring (19), which is connected to the hot air nozzle (13) and is rotatable with the latter.

10. The extrusion device according to any one of claims 1 to 9, **characterised in that** the hot air nozzle (13) comprises an apron (20), in order to allow the hot air directed in the direction of movement (traversing direction) of the extrusion device to exit ahead of the extruder die (10).

11. The extrusion device according to any one of claims 1 to 10, **characterised in that** the hot air nozzle (13) is located on an exchangeable attachment (25) fitted in an exchangeable manner to the extrusion device.

12. A method for the operation of an extrusion device with the features of any one of claims 1 to 11, **characterised in that** the extrusion device is arranged traverseably on a robot, a traversing device or on a machine in the x-direction and/or in the y-direction crosswise to the conveying direction of the extrudate and/or in the z-direction corresponding to the conveying direction of the extrudate, wherein, when there is a directional change in the traversing direction of the robot, the traversing device or the machine via a control device and also by means of at least one rotary drive device (15) and gearing means (17, 18), arranged between the rotary drive (15) and the rotatable hot air nozzle (13) or the hot air unit, the hot air nozzle (13) or the hot air unit is rotated in an angle of rotation corresponding to the directional change in the traversing direction in each case about the longitudinal axis of the conveying direction of the extruder unit, in such a way that the hot air directed in the traversing direction of the extrusion device exits in each case ahead of the extruder die (10).

## Revendications

1. Dispositif d'extrusion comprenant une unité extrudeuse dans laquelle un extrudé est transporté dans un sens de transport, l'extrudé sortant d'une buse extrudeuse (10) de l'unité extrudeuse, et comprenant également une unité d'air chaud comportant une buse à air chaud (13) qui est disposée de manière à ce que l'air chaud sorte près de la buse extrudeuse (10),
la buse à air chaud (13) ou l'unité d'air chaud étant disposée de manière à pouvoir tourner au niveau du dispositif d'extrusion autour d'un axe longitudinal du sens de transport de l'unité extrudeuse,
**caractérisé en ce qu'**il est prévu, pour le mouvement de rotation de la buse à air chaud (13) de l'unité d'air chaud autour de l'axe longitudinal du sens de transport, au moins un dispositif d'entraînement en rotation (15), de même que des moyens de transmission (17,18) disposés entre la commande de rotation (15) est la buse à air chaud rotative (13) ou l'unité d'air chaud.

2. Dispositif d'extrusion selon la revendication 1, **caractérisé en ce que** le dispositif d'entraînement en rotation (15) comprend un moteur d'entraînement et un arbre d'entraînement (16), de préférence cardanique, entraîné par ce moteur d'entraînement.

3. Dispositif d'extrusion selon une des revendications 1 ou 2, **caractérisé en ce que** les moyens de transmission comprennent au moins une roue dentée d'entraînement (17) qui est associée à un arbre d'entraînement (16), ainsi qu'au moins une roue dentée entraînée (18) qui est associée à la buse à air chaud (13) ou unité d'air chaud disposée de manière à pouvoir tourner.

4. Dispositif d'extrusion selon la revendication 3, **caractérisé en ce que** la roue dentée entraînée (18) est disposée concentriquement en entourant l'axe longitudinal du sens de transport de l'unité extrudeuse.

5. Dispositif d'extrusion selon une des revendications 3 ou 4, **caractérisé en ce que** la roue dentée d'entraînement (17) est disposée près de la roue dentée entraînée (18) et concentriquement sur un axe (24) entraîné par un arbre d'entraînement (16) et qui s'étend approximativement parallèlement à l'unité extrudeuse.

6. Dispositif d'extrusion selon une des revendications 3 à 5, **caractérisé en ce que** la roue dentée entraînée (18) est connectée à une pièce qui entoure la buse extrudeuse (10) concentriquement avec un espacement constitué par une fente annulaire (26).

7. Dispositif d'extrusion selon une des revendications 1 à 6, **caractérisé en ce que** l'unité d'air chaud comprend un anneau à air (19) qui s'étend concentriquement autour de la buse extrudeuse (10) et qui est alimenté en air chaud par un tube de brûleur (12).

8. Dispositif d'extrusion selon la revendication 7, **caractérisé en ce que** le tube de brûleur (12) et un anneau à air extérieur (21) connecté à celui-ci sont de type stationnaire, l'anneau à air extérieur (21) présentant un canal annulaire (22) traversé par l'air chaud.

9. Dispositif d'extrusion selon la revendication 8, **caractérisé en ce que** l'anneau à air extérieur (21) est en connexion d'écoulement avec un anneau à air intérieur (19) qui est connecté à la buse à air chaud (13) et peut tourner avec celles-ci.

10. Dispositif d'extrusion selon une des revendications 1 à 9, **caractérisé en ce que** la buse à air chaud (13) présente un tablier (20) afin de faire sortir l'air chaud dirigé dans le sens de mouvement (sens de circulation) du dispositif d'extrusion en amont de la buse extrudeuse (10).

11. Dispositif d'extrusion selon une des revendications 1 à 10, **caractérisé en ce que** la buse à air chaud (13) se trouve au niveau d'une saillie échangeable (25) installée de manière à pouvoir être échangée au niveau du dispositif d'extrusion.

12. Procédé d'utilisation d'un dispositif extrusion comportant les caractéristiques d'une des revendications 1 à 11, **caractérisé en ce que** le dispositif d'extrusion et disposé de manière à être déplaçable au niveau d'un robot, d'un dispositif de déplacement d'une machine dans le sens x et/ou dans le sens y transversalement au sens de transport de l'extrudé et/ou dans le sens z en fonction du sens de transport de l'extrudé, dans lequel, en cas de changement de sens dans le sens de déplacement du robot, du dispositif de déplacement ou de la machine par un dispositif de commande et au moyen d'au moins un dispositif d'entraînement en rotation (15) et d'un moyen de transmission (17,18) disposé entre la commande de rotation (15) et la buse à air chaud rotative (13) ou l'unité d'air chaud, la buse à air chaud (13) ou l'unité d'air chaud est tournée dans un angle de rotation en fonction du changement de sens dans le sens de déplacement respectivement autour de l'axe longitudinal de l'unité extrudeuse de manière à ce que l'air chaud sortant soit dirigé dans le sens de déplacement de l'unité d'extrusion respectivement en amont de la buse extrudeuse (10).
